# FASCICULE DE BREVET EUROPEEN

(11) **EP 0 938 773 B1**
(45) Date de publication et mention de la délivrance du brevet: **24.07.2002**
(21) Numéro de dépôt: 96939128.3
(22) Date de dépôt: 15.11.1996
(51) Int. Cl.: H02M 5/257, H02P 7/638

(54) **PROCEDE DE COMMANDE DE PUISSANCE D'UNE CHARGE VIA UN SYSTEME A REGLAGE DE PHASE ET DISPOSITIF DE MISE EN OEUVRE DE CE PROCEDE**
VERFAHREN ZUR STEUERUNG DER LEISTUNG EINER LAST DURCH EIN SYSTEM ZUR STEUERUNG DER PHASE UND VORRICHTUNG ZUR DURCHFÜHRUNG DIESES VERFAHRENS.
LOAD POWER CONTROL METHOD USING A PHASE CONTROL SYSTEM, AND DEVICE THEREFOR

(30) Priorité: 17.11.1995 FR 9513675
(43) Date de publication de la demande: 01.09.1999
(73) Titulaire: MOULINEX S.A., 75008 Paris (FR)
(72) Inventeur: DESCHENES, Laurent, F-14280 Saint-Germain-la-Blanche-Herbe (FR); GUINET, Michel, F-14052 Caen Cédex (FR)
(74) Mandataire: Busquets, Jean-Pierre
(86) Numéro de dépôt international: FR9601808
(87) Numéro de publication internationale: WO9719511

(56) Documents cités:
- EP-A- 0 560 255
- DE-A- 4 130 532
- RADIO FERNSEHEN ELEKTRONIK, vol. 33, no. 6, Juin 1984, BERLIN DE, pages 389-391, XP002008699 DIETMAR BERGHÄNEL: "Schwingungspaketsteuerung zur Leistungsregulierung elektrischer Maschinen"

## Description

La présente invention concerne un procédé de commande de la puissance fournie à une charge alimentée par une source de tension alternative U de période T via un système à réglage de phase généralisé.

Dans un but de satisfaire aux Normes concernant la limitation des perturbations apportées aux réseaux par les appareils électriques qu'ils soient du type résistif ou selfique ou une combinaison des deux types, la Demanderesse a décrit précédemment un premier procédé de commande qui a fait l'objet d'une demande de brevet d'invention FR 2726405.

Dans un tel procédé, pour une puissance de consigne préalablement fixée, on délivre successivement à ladite charge, périodiquement une séquence d'un nombre entier p d'éléments, p étant supérieur à un, chaque élément, de numéro i, de la séquence étant caractérisé par un nombre entier nᵢ de périodes T pendant lesquelles la tension alternative U est découpée symétriquement selon un angle de phase αᵢ correspondant à une durée tᵢ pendant laquelle la charge n'est pas alimentée, les angles de phases consécutifs αᵢ de l'élément i et αᵢ₊₁ de l'élément i+1 étant différents et la combinaison des angles α₁...α i...αₚ étant choisie de telle sorte qu'elle satisfasse auxdites Normes.

Ce premier procédé de commande pouvait occasionner dans certains cas d'utilisation et notamment sur des moteurs électriques, des vibrations mécaniques dues au cycle de modulation des angles de phase.

La présente invention vise à éviter notamment cet inconvénient et a pour objet un procédé efficace et simple de commande de la puissance fournie à une charge qu'elle soit de type résistive telle qu'une résistance chauffante, ou qu'elle soit du type inductif tel qu'un moteur électrique.

Selon l'invention, pour une puissance de consigne préalablement fixée, on délivre successivement à ladite charge, périodiquement une séquence d'un nombre entier p d'éléments, p étant supérieur à un, chaque élément, de numéro i, de la séquence étant caractérisé par un nombre entier nᵢ de demi-période T/₂ pendant lesquelles la tension alternative U est découpée selon des angles de phase consécutifs différents αᵢ allant de α₁ à αₙ correspondant respectivement à des durées tᵢ allant de t₁ à tn pendant laquelle la charge n'est pas alimentée, les angles de phases αᵢ de l'élément i et αᵢ₊₁ de l'élément i+1 ayant des valeurs semblables répétitives de telle sorte que le courant moyen soit nul sur un cycle complet tout en fournissant à la charge la puissance souhaitée.

Grâce à ce nouveau procédé on satisfait qu'elles que soient les charges aux Normes concernant la limitation des perturbations apportées aux réseaux par les appareils électriques notamment les Normes EN60555-2, CEI555-2, ainsi que leurs évolutions à venir EN61000-3-2 et CEI1000-3-2, limitant les niveaux des courants harmoniques, et les Normes EN60555-3, CEI555-3, ainsi que leurs évolutions à venir EN61000-3-3 et CEI1000-3-3, limitant les variations relatives de tension en fonction du nombre de ces variations par unité de temps sur une source d'impédance définie par la norme et qui sont la cause de perturbations connues sous le nom de "FLICKER".

Selon une autre caractéristique importante de l'invention, le nombre entier nᵢ de demi-périodes T/2 est impair.

Ainsi, dans l'application particulière aux moteurs, on améliore considérablement les problèmes de vibrations mécaniques notamment en créant des fréquences de vibrations plus élevées non sous multiples du 50Hz.

Les caractéristiques et avantages de l'invention ressortiront de la description qui va suivre, à titre d'exemple non limitatif, en référence au dessin annexé dans lequel :
- la figure 1 représente un chronogramme de la tension instantanée en fonction du temps dans une commande de puissance selon l'invention ;
- la figure 2 est un schéma synoptique d'un dispositif de commande de puissance selon l'invention.

Dans la description qui va suivre, l'invention est décrite plus particulièrement appliquée à une charge inductive telle qu'un moteur électrique, mais il est bien évident que cette invention est applicable à toute charge à caractère résistif telle qu'une résistance électrique de chauffage.

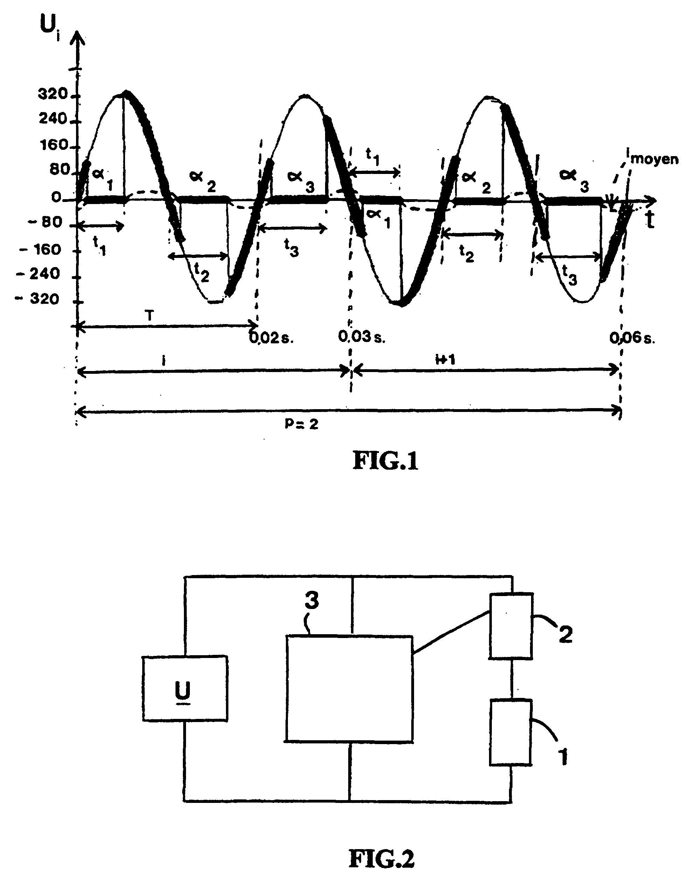

Le chronogramme illustré à la figure 1 comporte en abscisse le temps t et en ordonnée la tension instantanée de commande d'une charge 1 telle qu'un moteur. Un tel moteur appliqué, par exemple, dans un aspirateur est alimenté par une source de tension alternative U = 230 V de période T = 20 ms via un système à réglage de phase généralisé tel que par exemple un variateur en continu comportant un interrupteur électronique 2 du type TRIAC et pour lequel la puissance a été réglé à 500 Watts.

Comme on le voit sur la figure 1, on a schématisé en traits interrompus le courant moyen au travers de la charge qui, par le procédé de commande de l'invention, est nul.

Selon l'invention, pour une puissance de consigne préalablement fixée, on délivre successivement à ladite charge (1), périodiquement une séquence d'un nombre entier p d'éléments, p étant supérieur à un, chaque élément, de numéro i, de la séquence étant caractérisé par un nombre entier nᵢ de demi-période T/₂ pendant lesquelles la tension alternative U est découpée selon des angles de phase consécutifs différents αᵢ allant de α₁ à αₙ correspondant respectivement à des durées tᵢ allant de t₁ à tn pendant laquelle la charge (1) n'est pas alimentée, les angles de phases αᵢ de l'élément i et αᵢ₊₁ de l'élément i+1 ayant des valeurs semblables répétitives de telle sorte que le courant moyen soit nul sur un cycle complet tout en fournissant à la charge (1) la puissance souhaitée.

Dans l'exemple illustré, le nombre entier nᵢ de demi-période T/2 est impair et les valeurs alternées des angles α₁, α₂, α₃ de l'élément i et de l'élément i+1 référencées également α₁, α₂, α₃ sont distribués les unes sur l'alternance positive, les autres sur l'alternance négative.

A titre indicatif, les valeurs différentes des angles des phases α₁, α₂, α₃ sont données pour des durées t₁ = 5,3 ms ; t₂ = 6,5 ms et t₃ = 7,3 ms.

Comme illustré, après la synchronisation sur l'alternance positive, on applique le séquencement t₁, t₂, t₃, sur les trois demi-périodes consécutives, puis on se synchronise sur l'alternance négative pour appliquer de nouveau le séquencement des valeurs semblables alternées.

Grâce à ce procédé de commande, on obtient sur un moteur du type universel de 1600 W sous 230 V une variation de puissance qui respecte les normes sur les Flickers et notamment les normes sur les harmoniques de courant suivant EN60555-2 dont la limite, à titre de rappel, est pour H02 = 1,08A ; H03 = 2,3 A ; H04 = 0,434 ; H05 = 1 etc.

Ce procédé de commande de la puissance crée des vibrations mécaniques limitées à 44Hz et à 66Hz. Ceci s'explique en partie par la diminution des écarts entre les angles de commande par l'insertion d'un angle intermédiaire à 6,5 ms. Ainsi deux contraintes opposées sont prises en compte, celle qui impose d'écarter les angles de commande pour répondre aux limites des harmoniques de courant, et celle qui limite les écarts entre les angles afin de limiter l'amplitude des vibrations.

Les essais selon le procédé décrit ci-dessus montrent bien que pour des puissances choisies :
de 460 W, on a H01 = 3,7A ; H02 = 0,26A ; H03 = 2,2A ; de 800 W, on a H01 = 4,7A ; H02 = 0,56A ; H03 = 2,16A ; de 1050 W, on a H01 = 5,3A ; H02 = 0,53A ; H03 = 2,25A ; de 1340 W, on a H01 = 6,35A ; H02 = 0.41A ; H03 = 2,22A ;

Le procédé de commande de la puissance selon l'invention permet de bien respecter les normes et notamment la limite de l'harmonique 3, considéré comme la plus gênante.

Selon une autre caractéristique du procédé de l'invention, non illustrée, le nombre entier p d'éléments d'une séquence est pair, et, par exemple, les valeurs différentes des angles des phases α₁ et α₂ peuvent être données par les durées t1 = 5,3 ms et t2 = 6,5 ms.

Dans ce procédé, les durées t1 et t2 et partant les angles α₁, α₂ du premier élément s'étendent sur une alternance, et les durées t1 et t2 consécutives du second élément s'étendent sur l'autre alternance et ainsi de suite.

Un tel procédé de commande alternée sur deux alternances convient mieux à la commande de puissance d'une charge résistive telle qu'une résistance chauffante appliquée par exemple à un appareil de cuisson ou à un sèche-cheveux.

Selon encore une autre loi de commande du procédé de l'invention, et non représentée, les angles de phases i+1 ont des valeurs alternées inversées par exemple α₁, α ₂, α₁, α₂ pour le premier élément et α₂, α₁, α₂, α₁ pour le second élément consécutif constituant ainsi une séquence d'un nombre pair de demi-périodes T/2.

Ainsi, on fait suivre immédiatement une succession d'angles de commande par la même succession mais qui est inversée afin de s'opposer aux fréquences de vibrations générées par la première succession, la seconde succession générant les mêmes fréquences mais en opposition de phase.

Les différents procédés décrits ci-dessus sont mis en oeuvre par un circuit électrique (voir figure 2) comportant, outre l'interrupteur électronique 2, un moyen sélecteur 3 adapté à sélectionner les durées tᵢ et à générer des signaux de commandes dudit interrupteur de manière à fixer respectivement les valeurs des angles de phase αᵢ et αᵢ₊₁.

## Revendications

1. Procédé de commande de la puissance fournie à une charge (1) alimentée par une source de tension alternative U de période T via un système à réglage de phase généralisé,
**caractérisé en ce que,** pour une puissance de consigne préalablement fixée, on délivre successivement à ladite charge (1), périodiquement une séquence d'un nombre entier p d'éléments, p étant supérieur à un, chaque élément, de numéro i, de la séquence étant **caractérisé par** un nombre entier nᵢ de demi-période T/₂ pendant lesquelles la tension alternative U est découpée selon des angles de phase consécutifs différents αᵢ allant de α₁ à αₙ correspondant respectivement à des durées tᵢ allant de t₁ à tn pendant laquelle la charge (1) n'est pas alimentée, les angles de phases αᵢ de l'élément i et αᵢ₊₁ de l'élément i+1 ayant des valeurs semblables répétitives de telle sorte que le courant moyen soit nul sur un cycle complet tout en fournissant à la charge (1) la puissance souhaitée.

2. Procédé de commande selon la revendication 1,
**caractérisé en ce que** le nombre p d'éléments d'une séquence est pair.

3. Procédé de commande selon la revendication 1 ou 2,
**caractérisé en ce que** le nombre entier nᵢ de demi-périodes T_{/2} est impair.

4. Procédé de commande selon l'une quelconque des revendications précédentes,
**caractérisé en ce que** les valeurs semblables répétitives des angles de phase αᵢ des éléments i et i+1 sont distribués les unes sur l'alternance positive, les autres sur l'alternance négative.

5. Procédé de commande selon la revendication 1,
**caractérisé en ce que** les angles de phases α₁ de l'élément i et αᵢ₊₁ ont des valeurs répétitives inversées.

6. Procédé selon l'une quelconque des revendications précédentes,
**caractérisé en ce qu'**il est appliqué à la commande d'un moteur universel.

7. Dispositif destiné à mettre en oeuvre le procédé selon l'une quelconque des revendications précédentes,
**caractérisé en ce qu**'il comporte un interrupteur électronique (2) monté en série avec la charge (1) aux bornes de la tension alternative U et relié à la sortie S d'un moyen sélecteur (3) adapté à sélectionner les durées tᵢ et à générer des signaux de commande de l'interrupteur électronique (2) de manière à fixer respectivement les angles de phase αᵢ.

## Patentansprüche

1. Verfahren zur Steuerung der Leistung, die an eine Last (1) abgegeben wird, die von einer Wechselstromquelle mit der Spannung U und der Periode T über ein allgemeines Phasenregelsystem gespeist wird, **dadurch gekennzeichnet, daß** für eine zuvor festgelegte Sollleistung an die Last (1) nacheinander periodisch eine Folge einer ganzen Zahl p von Elementen, wobei p größer als eins ist, abgegeben wird, wobei jedes Element mit der Zahl i der Sequenz durch eine ganze Zahl nᵢ der Halbperiode T/2 **gekennzeichnet** ist, während der die Wechselspannung U gemäß aufeinanderfolgenden verschiedenen Phasenwinkeln αᵢ abgeschnitten wird, die von α₁ bis αₙ gehen und jeweils Zeitdauern tᵢ entsprechen, welche von t₁ bis tₙ gehen, während derer die Last (1) nicht gespeist wird, wobei die Phasenwinkel αᵢ des Elements i und αᵢ₊₁ des Elements i+1 ähnliche wiederholte Werte haben, so daß der mittlere Strom über einen vollständigen Zyklus null ist, dabei jedoch an die Last (1) die gewünschte Leistung abgegeben wird.

2. Verfahren zur Steuerung nach Anspruch 1, **dadurch gekennzeichnet, daß** die Anzahl p von Elementen einer Folge gerade ist.

3. Verfahren zur Steuerung nach Anspruch 1 oder 2, **dadurch gekennzeichnet, daß** die ganze Zahl nᵢ von Halbperioden T/2 ungerade ist.

4. Verfahren zur Steuerung nach einem der vorangehenden Ansprüche, **dadurch gekennzeichnet, daß** von den ähnlichen wiederholten Werten von Phasenwinkeln αᵢ der Elemente i und i+1 die einen über die positive Halbwelle, die anderen über die negativen Halbwelle verteilt sind.

5. Verfahren zur Steuerung nach Anspruch 1, **dadurch gekennzeichnet, daß** die Phasenwinkel α₁ des Elements i und αi+1 wiederholte umgekehrte Werte haben.

6. Verfahren nach einem der vorangehenden Ansprüche, **dadurch gekennzeichnet, daß** es zur Steuerung eines Universalmotors verwendet wird.

7. Vorrichtung zur Durchführung des Verfahrens nach einem der vorangehenden Ansprüche, **dadurch gekennzeichnet, daß** sie einen elektronischen Schalter (2) aufweist, der in Reihe mit der Last (1) an den Klemmen der Wechselspannung U liegt und mit dem Ausgang S einer Wahlvorrichtung (3) verbunden ist, welche geeignet ist, die Zeitdauern tᵢ zu wählen und Steuerungssignale für den elektronischen Schalter (2) zu erzeugen, um jeweils die Phasenwinkel αᵢ festzulegen.

## Claims

1. Method of controlling the power supplied to a load (1) supplied by a source of AC voltage U of period T via a generalised phase adjustment system, **characterised in that**, for a previously fixed set power, there is delivered successively to the said load (1), periodically, a sequence of an integer number p of elements, p being greater than one, each element, of number i, in the sequence being **characterised by** an integer number nᵢ of half-period T/2 during which the AC voltage U is chopped at different consecutive phase angles αᵢ ranging from α₁ to αₙ corresponding respectively to periods tᵢ ranging from t₁ to tₙ during which the load (1) is not supplied, the phase angles αᵢ of the element i and αᵢ₊₁ of the element i+1 having similar repetitive values so that the mean current is zero over a complete cycle whilst supplying the required power to the load (1).

2. Control method according to Claim 1, **characterised in that** the number p of elements in a sequence is even.

3. Control method according to Claim 1 or 2, **characterised in that** the integer number nᵢ of half-periods T/2 is odd.

4. Control method according to any one of the preceding claims, **characterised in that** the similar repetitive values of the phase angles αᵢ of the elements i and i+1 are distributed in some cases on the positive half-wave and in other cases on the negative half-wave.

5. Control method according to Claim 1, **characterised in that** the phase angles α₁ of the element i and αᵢ₊₁ have reversed repetitive values.

6. Method according to any one of the preceding claims, **characterised in that** it is applied to the control of a universal motor.

7. Device intended to implement the method according to any one of the preceding claims, **characterised in that** it has an electronic switch (2) mounted in series with the load (1) at the terminals of the AC voltage U and connected to the output S of a selection means (3) adapted to select the periods tᵢ and to generate control signals for the electronic switch (2) so as to respectively fix the phase angles αᵢ.
